# EUROPÄISCHE PATENTSCHRIFT

(11) **EP 3 495 129 B1**
(45) Veröffentlichungstag und Bekanntmachung des Hinweises auf die Patenterteilung: **09.06.2021**
(21) Anmeldenummer: 18194988.4
(22) Anmeldetag: 18.09.2018
(51) Int. Cl.: B29D 30/00, B29D 30/06

(54) **VERFAHREN ZUR HERSTELLUNG EINES FAHRZEUGLUFTREIFENS UNTER VERWENDUNG EINES VULKANISATIONSWERKZEUGES**
METHOD FOR MANUFACTURING A PNEUMATIC TYRE FOR A VEHICLE USING A VULCANISATION TOOL
PROCÉDÉ DE FABRICATION DE PNEUMATIQUES DE VÉHICULE À L'AIDE D'UN OUTIL DE VULCANISATION

(30) Priorität: 05.12.2017 DE 102017221892
(43) Veröffentlichungstag der Anmeldung: 12.06.2019
(73) Patentinhaber: Continental Reifen Deutschland GmbH, 30165 Hannover (DE)
(72) Erfinder: Behr, Ulrich, 30167 Hannover (DE)
(74) Vertreter: Continental Corporation

(56) Entgegenhaltungen:
- EP-A1- 2 088 007
- EP-A1- 2 711 202
- EP-A2- 2 368 725

## Beschreibung

Die Erfindung betrifft ein Verfahren zur Herstellung eines Fahrzeugluftreifens unter Verwendung eines Vulkanisationswerkzeuges.

Aus der DE 2014 212 346 A1 ist bereits ein Fahrzeugluftreifen bekannt, der eine profilierte Lauffläche aufweist, die beidseitig in je eine Seitenwand übergeht und deren Enden durch je einen Reifenwulst gebildet werden. Ein derartiger Fahrzeugluftreifen wird in einem ebenfalls beschriebenen Vulkanisationswerkzeug hergestellt, das aus mehreren, in radialer Richtung bewegbar angeordneten Profilsegmenten eines Segmentringes besteht, die der Erzeugung der Profilierung der Lauffläche des Fahrzeugluftreifens dienen. Darüber hinaus weist das Vulkanisationswerkzeug mehrere Seitenwandschalen zur Ausbildung der Seitenwände auf, wobei zwischen dem Segmentring und den Seitenwandschalen eine Formtrennebene definiert ist. Dies hat zur Folge, dass die einzelnen Elemente des Vulkanisationswerkzeuges voneinander getrennt werden können, um einen Reifenrohling, der auch als "grüner Reifen" bezeichnet wird, in das Vulkanisationswerkzeug einsetzen und den fertig gestellten, also vulkanisierten Fahrzeugluftreifen aus dem Vulkanisationswerkzeug entnehmen zu können. Die Formtrennebene ist dabei nicht zwangsläufig als eine durchgehende Ebene zu verstehen. Vielmehr kann sie innerhalb des Vulkanisationswerkzeuges auch abgesetzt oder gestuft sein. Letztlich stellt die Formtrennebene im weiteren Sinne mindestens eine Berührungsfläche zwischen den Seitenwandschalen und dem aus mehreren Profilsegmenten bestehenden Segmentring dar. Während des Schließens des Vulkanisationswerkzeuges ist es durch den Schließdruck nahezu unvermeidbar, dass Teile des Gummiwerkstoffes des Reifenrohlings zwischen die Seitenwandschalen und den Segmentring gepresst werden, was dazu führt, dass im Bereich der Formtrennebene Austriebe entstehen können. Zudem dringt beim Vulkanisieren überschüssiges Gummimaterial des in das Vulkanisationswerkzeug eingesetzten Reifenrohlings in die Formtrennebene ein, sodass am fertig vulkanisierten Fahrzeugluftreifen auch dadurch Austriebe entstehen, die zumeist einen kreisförmig, zwischen der Seitenwand und der Lauffläche umlaufenden, dünnen und abstehenden Gummifilm bilden. Diese Austriebe sind am Fahrzeugluftreifen jedoch nicht erwünscht und werden durch das so genannte "Trimmen", manuell mit hierfür geeigneten Trimmmessern entfernt. Damit das Trimmen der Austriebe leichter fällt, ist es bekannt, die Profilsegmente des Segmentringes und/oder die Seitenwandschalen derart auszubilden, dass auf einer oder auf beiden Seiten der Formtrennebene Gummikeile als umlaufende Rippen am Fahrzeugluftreifen ausgebildet werden, die aufgrund ihrer Erhöhung das Trimmen erleichtern sollen. Diese umlaufenden Rippen am Fahrzeugluftreifen erfordern jedoch zusätzliches Gummimaterial, sodass sich dadurch die Herstellungskosten und das Reifengewicht erhöhen, wobei Letzteres zu einer Verschlechterung der Aerodynamik des Fahrzeugluftreifens im Betriebszustand führt.

Die DE 2014 212 346 A1 offenbart zur Reduzierung der Entstehung der Austriebe eine Lösung, die darin besteht, dass entlang der Formtrennebene eine Nut verläuft, welche zum Teil in den Profilsegmenten und zum Teil in der jeweiligen Seitenwandschale ausgebildet ist, wobei sich die Formtrennebene am Boden der Nut befindet. Der dadurch am Fahrzeugluftreifen entstehende Vorsprung ermöglicht einen sauberen Schnitt beim Abtrennen der Austriebe. Dabei wird ausgeführt, dass der Vorsprung komplett, teilweise oder größtenteils abgeschnitten werden kann, sodass dieser Bereich sehr gut trimmbar ist und auch im Vorsprung gegebenenfalls ausgebildete Stufen, die durch ein etwaiges Verschieben der Formteile des Vulkanisationswerkzeuges relativ zueinander gebildet worden sind, entfernt werden können. Auf besonders einfache und rationelle Weise wird damit ein teilweises oder komplettes Abschneiden der Vorsprünge möglich, die gemäß des Offenbarungsgehaltes der Druckschrift im Querschnitt dreieckförmig oder gerundet oder zum Beispiel kuppelförmig gerundet, ausgeführt sind. Auch die Dimensionierung der Vorsprünge spielt laut der DE 2014 212 346 A1 eine gewisse Rolle, da sich sowohl zu große als auch zu kleine Vorsprünge schwieriger abschneiden lassen. Es wird daher in der Druckschrift als vorteilhaft beschrieben, wenn die Vorsprünge am Reifen eine Höhe von 1,5 mm bis 2,5 mm und an ihrer Basis an der Seitenwand eine Breite von ebenfalls 1,5 mm bis 2,5 mm aufweisen. Anders ausgedrückt weisen die Vorsprünge eine gleichmäßige Geometrie auf.

Aus der DE 10 2009 044 362 A1 ist es darüber hinaus bekannt, in den Seitenwandschalen und/oder den Profilsegmenten des Segmentringes des Vulkanisationswerkzeuges an oder nahe des Bereiches der Formtrennebene und entlang dieser, einzelne, in axialer Richtung verlaufende Kanäle vorzusehen. Es werden daher in dem Vulkanisationswerkzeug für überschüssiges Gummimaterial gezielt Aufnahmeräume für überschüssiges Gummimaterial zur Verfügung gestellt. In dem ebenfalls beschriebenen, fertig gestellten Fahrzeugluftreifen entstehen dadurch einzelne, kleine, stiftartige Gummigrate, die sich leichter entfernen lassen sollen als die sonst üblichen Austriebe. Es hat sich jedoch herausgestellt, dass sich auch diese einzelnen, stiftartigen Austriebe relativ schwer trimmen lassen, da sie recht flexibel sind und sich dadurch vom Trimmmesser nicht gut erfassen lassen.

Die DE 696 00 888 T2 betrifft einen Fahrzeugluftreifen, bei dem im Bereich der Formtrennebene eine Mehrzahl von Vertiefungen und eine Umfangsnut vorgesehen sind, wobei jede Vertiefung eine Tiefe von 0,5 mm bis 5,0 mm und eine maximale Umfangslinie von 5,0 mm bis 10,0 mm aufweist. Eine derartige Lösung hat den Nachteil, dass der Schulterbereich des Fahrzeugluftreifens, der sich im Übergang zwischen der Lauffläche und der Seitenwand befindet, relativ stark strukturiert ist, was wiederum dazu führt, dass sich die Aerodynamik des Fahrzeugluftreifens verschlechtert. Dies kann neben einer Verschlechterung des Kraftstoffverbrauchs des mit dem Fahrzeugluftreifen ausgestatteten Kraftfahrzeuges auch zur Folge haben, dass eine verstärkte Geräuschentwicklung im Betriebszustand des Fahrzeugluftreifens zu verzeichnen ist.

Die EP 711 202 A1, die EP 2 088 007 A1 und die EP 2 368 725 A2 betreffen jeweils Fahrzeugluftreifen, bei denen, im Reifenquerschnitt betrachtet, eine der Seitenwände im Bereich der größten Breite des Fahrzeugluftreifens ein die Seitenwand gegen Scheuerkontakte schützendes Schutzelement vorhanden ist. Dabei weisen die Schutzelemente zum Teil eine plateauähnliche Geometrie auf und verfügen im Übergangsbereich zu der Oberfläche der Seitenwand des Fahrzeugluftreifens über Erhebungen in Form von Absätzen beziehungsweise über Vertiefungen. In Umfangsrichtung des Fahrzeugluftreifens betrachtet können die Schutzelemente umlaufend oder mit Unterbrechungen aus der Seitenwand herausgeformt sein. Insbesondere, das Patentdokument EP 2 711 202 A1 offenbart die Merkmale des Oberbegriffs von Anspruch 1.

Aus dem bekannten Stand der Technik ergibt sich, dass bisher noch keine befriedigende Lösung gefunden wurde, einen Fahrzeugluftreifen mittels eines Vulkanisationswerkzeuges herzustellen, der aerodynamisch günstig gestaltet ist, keine Anfälligkeit für Rissbildungen aufweist und bei dem die nicht vermeidbaren Austriebe sich auf einfache Weise und mit wenig Aufwand vom Fahrzeugluftreifen entfernen lassen. Durch das Trimmen kann bisher sogar die Seitenwand des Fahrzeugluftreifens beschädigt werden, wenn das Trimmmesser nicht hundertprozentig exakt geführt wird. Dies ist jedoch bei einer manuellen Tätigkeit nicht immer zu gewährleisten.

Der Erfindung liegt die Aufgabe zugrunde, ein Verfahren zur Herstellung eines Fahrzeugluftreifens unter Verwendung eines Vulkanisationswerkzeuges bereitzustellen, wobei der Fahrzeugluftreifen aerodynamisch günstig ausgeführt ist und Austriebe aufweist, die mit zuverlässiger Qualität und auf einfache Weise sowie mit geringem Aufwand vom Fahrzeugluftreifen abgetrennt werden können, ohne dass dabei Beschädigungen der Seitenwand entstehen.

Die Erfindung löst diese Aufgabenstellung mit den Merkmalen des Patentanspruches 1. Weitere Ausgestaltungen der Erfindung sind Gegenstand der sich anschließenden Unteransprüche. Die Erfindung betrifft ein Verfahren zur Herstellung eines Fahrzeugluftreifens, der mit einer profilierten Lauffläche ausgestattet ist, die beidseitig in je eine Seitenwand übergeht, deren Enden durch je einen Reifenwulst gebildet werden, wobei der Fahrzeugluftreifen an seiner durch die Laufrichtung des Fahrzeugluftreifens definierten Außenseite eine zumindest abschnittsweise, in Umfangsrichtung verlaufende, von der Seite der Lauffläche ausgehend, in Richtung des Reifenwulstes orientierte, rampenartig ansteigende Erhebung und eine sich an die Erhebung anschließende Plateaufläche aufweist, unter Verwendung eines Vulkanisationswerkzeuges, das aus mehreren, in radialer Richtung bewegbar angeordneten Profilsegmenten eines Segmentringes, zur Profilierung der Lauffläche und aus mehreren Seitenwandschalen zur Ausbildung der Seitenwände besteht, wobei zwischen dem Segmentring und den Seitenwandschalen eine Formtrennebene definiert ist, wobei die Seitenwandschalen eine zu der Erhebung und der Plateaufläche komplementäre Ausnehmung aufweisen, gekennzeichnet durch folgende Verfahrensschritte:
- Einbringung eines Reifenrohlings oder "grünen Reifens" in das aus mehreren, in radialer Richtung bewegbar angeordneten Profilsegmenten eines Segmentringes, zur Profilierung der Lauffläche und aus mehreren Seitenwandschalen zur Ausbildung der Seitenwände bestehende Vulkanisationswerkzeug, bei dem zwischen dem Segmentring und den Seitenwandschalen eine Formtrennebene definiert ist,
- Schließen des Vulkanisationswerkzeuges und Ausbildung des Fahrzeugluftreifens durch Erhitzung des Vulkanisationswerkzeuges auf die Vulkanisationstemperatur,
- Entnahme des dadurch erzeugten Fahrzeugluftreifens aus dem Vulkanisationswerkzeug,
- Abtrennen der Erhebung und des Plateaus bis auf die Oberfläche der Außenseite der Seitenwand des Fahrzeugluftreifens.

Ein Fahrzeugluftreifen, mit einer profilierten Lauffläche, die beidseitig in je eine Seitenwand übergeht, deren Enden durch je einen Reifenwulst gebildet werden und der in einem Vulkanisationswerkzeug hergestellt ist, das aus mehreren, in radialer Richtung bewegbar angeordneten Profilsegmenten eines Segmentringes, zur Profilierung der Lauffläche und aus mehreren Seitenwandschalen zur Ausbildung der Seitenwände besteht, wobei zwischen dem Segmentring und den Seitenwandschalen eine Formtrennebene definiert ist, weist demnach vor dem Abtrennen der Erhebung und des Plateaus bis auf die Oberfläche der Außenseite der Seitenwand des Fahrzeugluftreifens an seiner durch die Laufrichtung des Fahrzeugluftreifens definierten Außenseite eine zumindest abschnittsweise, in Umfangsrichtung verlaufende, von der Seite der Lauffläche ausgehend, in Richtung des Reifenwulstes orientierte, rampenartig ansteigende Erhebung und eine sich an die Erhebung anschließende Plateaufläche auf.

Die Erfindung geht einen vollkommen neuen Weg. Hier wird nicht einfach ein wulstförmiger Vorsprung an der Außenseite der Seitenwand des Fahrzeugluftreifens vorgesehen, sondern eine speziell gestaltete Kontur mit einer rampenartig ansteigenden Erhebung, an der das Trimmmesser optimal angesetzt und entlanggeführt werden kann, was dazu führt, dass der entstandene Austrieb nahezu rückstandsfrei entfernt werden kann, ohne dass dabei Beschädigungen des Fahrzeugluftreifens zu verzeichnen sind. Am Fahrzeugluftreifen ergibt sich dadurch ein entsprechend hoher und breiter Ring, dessen oberer "Anfang" an der Formtrennebene beginnt, so dass genau an dieser Stelle Austriebe entstehen können die durch die Erhebung ausreichend gut abgeschnitten werden können. Ein weiterer, sehr wesentlicher Vorteil dieser Lösung besteht darin, dass durch die gegebene Möglichkeit der vollständigen Abtrennung des Austriebs, der Fahrzeugluftreifen eine optimierte, gleichmäßige Außenoberfläche der Seitenwand und damit eine verbesserte Aerodynamik im Vergleich mit herkömmlichen Fahrzeugluftreifen aufweist. Dies führt zu einer Reduzierung der während des Fahrbetriebs entstehenden Geräusche und zu einer Reduzierung des Kraftstoffverbrauchs des mit dem Fahrzeugluftreifen ausgestatteten Kraftfahrzeugs.

Einer Ausgestaltung der Erfindung entsprechend, ist die Formtrennebene im Bereich der Erhebung, vor der Plateaufläche angeordnet.
Der Vorteil einer derartigen Lösung ist darin zu sehen, dass die Werkzeughälften des Vulkanisationswerkzeuges sehr einfach ausgeführt und zudem problemlos voneinander getrennt werden können. Die Herstellung des Vulkanisationswerkzeuges ist einfacher, als bei bekannten Ausführungen und damit kostengünstiger.

Der Übergang der Plateaufläche zur Oberfläche der Seitenwand des Fahrzeugluftreifens kann unterschiedlich gestaltet und entsprechend einer ersten, weiterbildenden Maßnahme der Erfindung derart ausgeführt sein, dass die Plateaufläche einen Übergang zur Seitenwand des Fahrzeugluftreifens aufweist und die Höhe des Überganges in Relation zur Außenseite der Seitenwand des Fahrzeugluftreifens geringer ist als die Höhe der Erhebung. Mit anderen Worten ausgedrückt liegt hier eine Abstufung vor, sodass die Plateaufläche, im Querschnitt betrachtet, eine Neigung zur Außenoberfläche der Seitenwand des Fahrzeugluftreifens aufweist. Auf diese Weise wird es möglich, dass von der Erhebung ausgehend eine stufige Absenkung der Ausformung des Fahrzeugluftreifens im Bereich der Austriebe gegeben ist. Damit steht in diesem Bereich insgesamt genügend Gummiwerkstoff zur Verfügung, um das Trimmmesser optimal führen und den gesamten Austrieb gleichmäßig abtrennen zu können.

Die Plateaufläche kann jedoch auch als ein Ring an der Außenseite der Seitenwand ausgebildet sein, sodass ihr Verlauf in diesem Fall über die gesamte Breite der Plateauflächen äquidistant zur Außenseite der Seitenfläche des Fahrzeugluftreifens verläuft.

Eine alternative Lösung zu der zuvor beschriebenen Ausführung beziehungsweise Anordnung der Plateaufläche besteht darin, dass die Plateaufläche zu der Oberfläche der Seitenwand des Fahrzeugluftreifens auslaufend ausgeführt ist und damit nahtlos in die Seitenwand übergeht.
In diesem Fall ist folglich kein Übergang zwischen der Plateaufläche und der Außenseite der Seitenwand des Fahrzeugluftreifens gegeben. Auf diese Weise wird ein insgesamt sehr gleichmäßiger Übergang des Austriebs zur Außenoberfläche der Seitenwand geschaffen.

Der gesamte Austrieb weist eine lokal begrenzte Fläche an der Seitenwand des Fahrzeugluftreifens auf. Dies ist erforderlich, um ihn mittels eines Trimmmessers optimal abtrennen zu können. Daher ist es von Vorteil, wenn die im Sinne des Verlaufs der Plateaufläche, ausgehend von der Lauffläche, in Richtung Reifenwulst zu betrachtende Breite der Plateaufläche zwischen 1 mm und 4 mm beträgt. Eine bevorzugte Breite der Plateauflächen beträgt jedoch 2 mm.

Darüber hinaus ist es von Vorteil, wenn die Höhe der Erhebung vor der Plateaufläche zwischen 0,2 mm und 0,6 mm beträgt. Dabei ist bevorzugt eine Höhe von 0,3 mm vorgesehen.

Ein Vulkanisationswerkzeug zur Herstellung eines Fahrzeugluftreifens, wie er zuvor beschrieben wurde, weist mehrere, in radialer Richtung bewegbar angeordnete Profilsegmente eines Segmentringes zur Profilierung der Lauffläche und mehrere Seitenwandschalen zur Ausbildung der Seitenwände auf, wobei zwischen dem Segmentring und den Seitenwandschalen eine Formtrennebene definiert ist und lediglich die Seitenwandschalen eine zu der Erhebung und dem Plateau komplementäre Ausnehmung aufweisen.
Dies bedeutet, dass das Vulkanisationswerkzeug einen sehr einfach aufgebauten Segmentring aufweist, sodass es folglich lediglich im Bereich der Seitenwandschalen eine Negativkontur zu dem erfindungsgemäßen Fahrzeugluftreifen aufweist und folglich an diesen angepasst ist.
Demnach ist ganz allgemein ausgedrückt, das Vulkanisationswerkzeug derart ausgebildet, dass die Austriebe des in dem Vulkanisationswerkzeug zu erzeugenden Fahrzeugluftreifens in die vorgegebene Geometrie des Vulkanisationswerkzeuges vordringen können und dabei die spezielle, erfindungsgemäße Oberflächenstruktur an der Seitenwand des Fahrzeugluftreifens erzeugen, die später mit einem Trimmmesser abgetrennt wird. Da diese speziellen Geometrien unmittelbar in das Vulkanisationswerkzeug eingearbeitet sind, ist kein wesentlicher, zusätzlicher Fertigungsaufwand erforderlich, um die Erhebung und die Plateaufläche an dem Fahrzeugluftreifen auszubilden.

Wie zuvor bereits ausgeführt wurde, erfolgt das Abtrennen durch ein Schneidverfahren, bei dem es sich bevorzugt um ein Schneiden mittels eines Trimmmessers handelt.

Dabei kann das Abtrennen manuell oder automatisiert erfolgen. Eine automatisierte Abtrennung, die beispielsweise mittels eines hierfür geeigneten Roboters erfolgen kann, spart dabei zusätzliche Arbeitszeit und Arbeitskräfte, sodass auch die manuellen Tätigkeiten bei der Herstellung eines Fahrzeugluftreifens erheblich reduziert werden können.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: ausschnittsweise einen Querschnitt durch einen in ein Vulkanisationswerkzeug eingesetzten Fahrzeugluftreifen
und
- Figur 2:: den vergrößerten Ausschnitt II aus Figur 1.

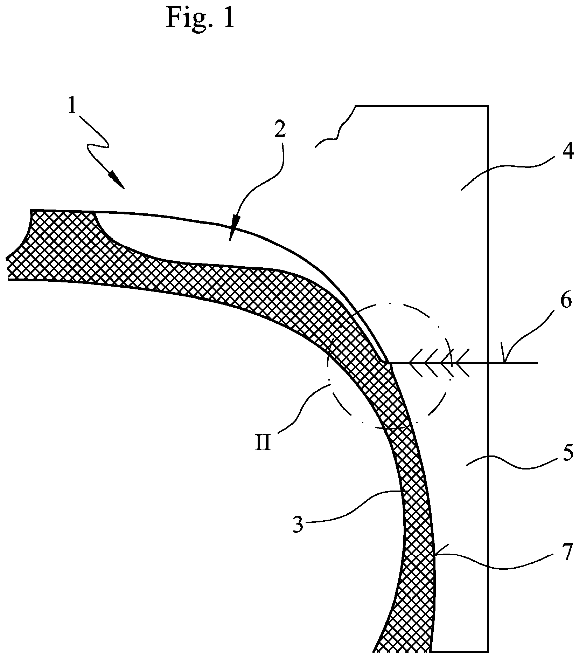

In der Figur 1 ist ausschnittsweise ein Querschnitt durch einen Fahrzeugluftreifen 1 dargestellt, der in ein Vulkanisationswerkzeug eingesetzt ist und in an sich bekannter Weise eine mit einem Laufflächenprofil ausgestattete Lauffläche 2 aufweist, die beidseitig in je eine Seitenwand 3 übergeht. Die Seitenwand 3 endet in einem Reifenwulst, der zur luftdichten Einlage des Fahrzeugluftreifens 1 in einer Felge eines Fahrzeugrades dient, wobei der Reifenwulst und die Felge in der Figur 1 nicht dargestellt sind. Das Vulkanisationswerkzeug besteht aus einem Segmentring 4, der seinerseits aus mehreren, in radialer Richtung bewegbar angeordneten Profilsegmenten zusammengesetzt ist, sodass das Vulkanisationswerkzeug geöffnet und geschlossen werden kann, um den Reifenrohling, der auch als "grüner Reifen" bezeichnet wird, in das Vulkanisationswerkzeug einlegen und den Fahrzeugluftreifen 1 nach seiner Fertigstellung aus dem Vulkanisationswerkzeug entnehmen zu können. Der abnehmbare Segmentring 4 ist unter Bildung einer Abdichtung mit mehreren Seitenwandschalen 5 lösbar verbunden, wobei der Verbindungsbereich eine Formtrennebene 6 bildet. Die Seitenwandschalen 5 sind dazu ausgelegt, die Seitenwände 3 des Fahrzeugluftreifens 1 auszubilden, wenn dieser in dem Vulkanisationswerkzeug vulkanisiert wird. Dabei weist die Innenoberfläche der Seitenwandschalen 5 eine zu den Außenseiten 7 der Seitenwände 3 komplementäre Geometrie auf.

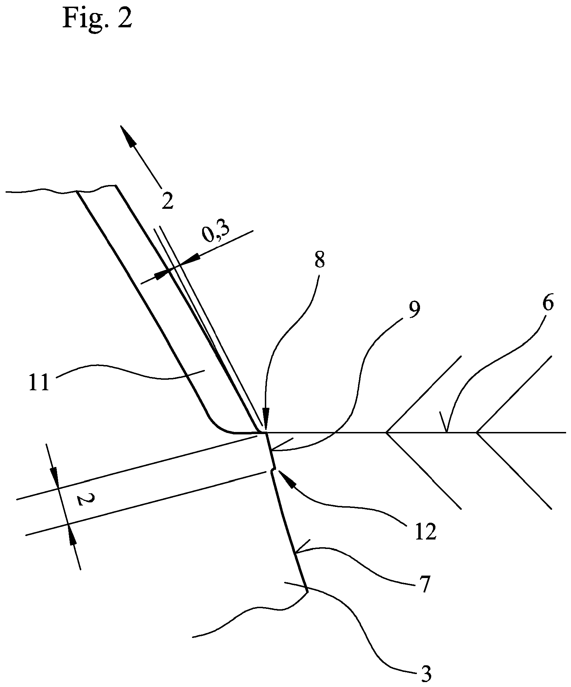

Die erfindungsgemäße Besonderheit wird deutlicher aus dem vergrößerten Ausschnitt II aus Figur 1, der Gegenstand der Darstellung in der Figur 2 ist. Im Bereich der Formtrennebene 6 wird der Fahrzeugluftreifen 1 erfindungsgemäß mit einer Geometrie ausgestattet, die sich nach seiner Fertigstellung mittels eines Trimmmessers auf einfache Weise abtrennen lässt. Betrachtet man die Außenseite 7 der Seitenwand 3 des Fahrzeugluftreifens 1 ausgehend von der Lauffläche 2 in Richtung des in der Figur 2 nicht dargestellten Reifenwulstes, also entgegen der Richtung des Pfeils "2", so besteht die als Austrieb zu bezeichnende, erhabene Geometrie aus einer rampenartig ansteigenden Erhebung 8, die in eine Plateaufläche 9 übergeht, deren Breite bei dem dargestellten Beispiel 2 mm beträgt. Hierbei ist zu beachten, dass sowohl die Erhebung 8, als auch die Plateaufläche 9 in der Figur 2 als Querschnitt dargestellt sind und daher am Fahrzeugluftreifen 1 folglich jeweils einen in Umfangsrichtung umlaufenden Ring bilden. Die Besonderheit besteht vorliegend darin, dass die Plateaufläche 9 und damit auch die erste Erhebung 8 bei dem dargestellten Beispiel in Bezug zu der Außenseite 7 der Seitenfläche 3 des Fahrzeugluftreifens 1 eine Höhe von 0,3 mm aufweist.
Eine weitere Besonderheit besteht bei der in Figur 2 gezeigten Ausführung darin, dass die Plateaufläche 9 eine Neigung zur Außenseite 7 der Seitenwand 3 aufweist, was bedeutet, dass die Plateaufläche 9 einen Übergang 12 zur Seitenwand 3 aufweist, dessen Höhe in Relation zur Außenseite 7 der Seitenwand 3 des Fahrzeugluftreifens 1 geringer ist als die Höhe der Erhebung 8.
Weiterhin gilt es vorliegend zu beachten, dass die Formtrennebene 6 am Ende der rampenartigen Erhebung 8 und vor der Plateaufläche 9 verläuft. Die ausschnittsweise vergrößerte Schnittdarstellung in Figur 2 verläuft durch eine Profilvertiefung des Fahrzeugluftreifens 1, sodass im oberen, laufflächenseitigen Abschnitt des dargestellten Teils des Fahrzeugluftreifens 1 eine Profilausnehmung 11 erkennbar ist.

### Bezugszeichenliste

- 1: Fahrzeugluftreifen
- 2: Lauffläche
- 3: Seitenwand
- 4: Segmentringes
- 5: Seitenwandschale
- 6: Formtrennebene
- 7: Außenseite
- 8: Erhebung
- 9: Plateaufläche
- 10:
- 11: Profilausnehmung
- 12: Übergang

## Patentansprüche

1. Verfahren zur Herstellung eines Fahrzeugluftreifens (1), der mit einer profilierten Lauffläche (2) ausgestattet ist, die beidseitig in je eine Seitenwand (3) übergeht, deren Enden durch je einen Reifenwulst gebildet werden, wobei der Fahrzeugluftreifen (1) an seiner durch die Laufrichtung des Fahrzeugluftreifens (1) definierten Außenseite (7) eine zumindest abschnittsweise, in Umfangsrichtung verlaufende, von der Seite der Lauffläche (2) ausgehend, in Richtung des Reifenwulstes orientierte, rampenartig ansteigende Erhebung (8) und eine sich an die Erhebung (8) anschließende Plateaufläche (9) aufweist, unter Verwendung eines Vulkanisationswerkzeuges, das aus mehreren, in radialer Richtung bewegbar angeordneten Profilsegmenten eines Segmentringes (4), zur Profilierung der Lauffläche (2) und aus mehreren Seitenwandschalen (5) zur Ausbildung der Seitenwände (3) besteht, wobei zwischen dem Segmentring (4) und den Seitenwandschalen (5) eine Formtrennebene (6) definiert ist, wobei die Seitenwandschalen (5) eine zu der Erhebung (8) und der Plateaufläche (9) komplementäre Ausnehmung aufweisen, **gekennzeichnet durch** folgende Verfahrensschritte:
- Einbringung eines Reifenrohlings oder "grünen Reifens" in das aus mehreren, in radialer Richtung bewegbar angeordneten Profilsegmenten eines Segmentringes (4), zur Profilierung der Lauffläche (2) und aus mehreren Seitenwandschalen (5) zur Ausbildung der Seitenwände (3) bestehende Vulkanisationswerkzeug, bei dem zwischen dem Segmentring (4) und den Seitenwandschalen (5) eine Formtrennebene (6) definiert ist,
- Schließen des Vulkanisationswerkzeuges und Ausbildung des Fahrzeugluftreifens (1) durch Erhitzung des Vulkanisationswerkzeuges auf die Vulkanisationstemperatur,
- Entnahme des dadurch erzeugten Fahrzeugluftreifens (1) aus dem Vulkanisationswerkzeug,
- Abtrennen der Erhebung (8) und des Plateaus (9) bis auf die Oberfläche der Außenseite (7) der Seitenwand (3) des Fahrzeugluftreifens (1).

2. Verfahren nach Anspruch 1,
**dadurch gekennzeichnet, dass**
die Formtrennebene (6) des Vulkanisationswerkzeuges im Bereich der Erhebung (8), vor der Plateaufläche (9) des Fahrzeugluftreifens (1) verläuft.

3. Verfahren nach einem der vorstehend genannten Ansprüche,
**dadurch gekennzeichnet, dass**
vor dem Abtrennen der Erhebung (8) und des Plateaus (9) die Plateaufläche (9) einen Übergang (12) zur Seitenwand (3) des Fahrzeugluftreifens (1) aufweist und die Höhe des Überganges (12) in Relation zur Außenseite (7) der Seitenwand (3) des Fahrzeugluftreifens (1) geringer ist als die Höhe der Erhebung (8).

4. Verfahren nach einem der vorstehend genannten Ansprüche,
**dadurch gekennzeichnet, dass**
vor dem Abtrennen der Erhebung (8) und des Plateaus (9) die Erhebung (8) und die Plateaufläche (9) jeweils als ein Ring an der Außenseite (7) der Seitenwand (3) des Fahrzeugluftreifens (1) ausgebildet sind und die Oberfläche der Plateufläche (9) äquidistant zur Außenseite (7) der Seitenwand (3) verläuft.

5. Verfahren nach einem der Ansprüche 1 oder 2,
**dadurch gekennzeichnet, dass**
vor dem Abtrennen der Erhebung (8) und des Plateaus (9) die Plateaufläche (9) zu der Oberfläche der Seitenwand (3) des Fahrzeugluftreifens (1) auslaufend ausgeführt ist und nahtlos in die Seitenwand (3) übergeht.

6. Verfahren nach einem der vorstehend genannten Ansprüche,
**dadurch gekennzeichnet, dass**
vor dem Abtrennen der Erhebung (8) und des Plateaus (9) die im Sinne des Verlaufs der Plateaufläche (9), ausgehend von der Lauffläche (2), in Richtung Reifenwulst zu betrachtende Breite der Plateaufläche (9) zwischen 1 mm und 4 mm beträgt.

7. Verfahren nach einem der vorstehend genannten Ansprüche,
**dadurch gekennzeichnet, dass**
vor dem Abtrennen der Erhebung (8) und des Plateaus (9) die Höhe der Erhebung (8) vor der Plateaufläche (9) zwischen 0,2 mm und 0,6 mm beträgt.

8. Verfahren nach einem der vorstehend genannten Ansprüche,
**dadurch gekennzeichnet, dass**
das Abtrennen ein Schneidverfahren ist.

9. Verfahren nach einem der vorstehend genannten Ansprüche,
**dadurch gekennzeichnet, dass**
das Abtrennen manuell oder automatisiert erfolgt.

10. Verfahren nach einem der vorstehend genannten Ansprüche,
**dadurch gekennzeichnet, dass**
der an dem Fahrzeugluftreifen während des Vulkanisationsvorganges entstehende Austrieb rückstandsfrei entfernt wird.

## Claims

1. Method for producing a pneumatic vehicle tyre (1), which is provided with a profiled tread (2), which goes over on each of both sides into a sidewall (3), the ends of which are each formed by a tyre bead, the pneumatic vehicle tyre (1) having on its outer side (7), defined by the running direction of the pneumatic vehicle tyre (1), an elevation (8), which at least in certain portions runs in the circumferential direction and, proceeding from the side of the tread (2), is oriented in the direction of the tyre bead and rises in a ramp-like manner, and a plateau surface (9) adjoining the elevation (8), using a vulcanizing mould, which consists of multiple profile segments of a segment ring (4) arranged movably in the radial direction, for profiling the tread (2), and of multiple sidewall shells (5), for forming the sidewalls (3), a mould parting plane (6) being defined between the segment ring (4) and the sidewall shells (5), the sidewall shells (5) having a recess that complements the elevation (8) and the plateau surface (9), comprising the following method steps:
- introducing a tyre blank or "green tyre" into the vulcanizing mould consisting of multiple profile segments of a segment ring (4) arranged movably in the radial direction, for profiling the tread (2), and of multiple sidewall shells (5), for forming the sidewalls (3), in which a mould parting plane (6) is defined between the segment ring (4) and the sidewall shells (5),
- closing the vulcanizing mould and forming the pneumatic vehicle tyre (1) by heating the vulcanizing mould to the vulcanizing temperature,
- removing the pneumatic vehicle tyre (1) thereby produced from the vulcanizing mould, **characterized by**
- detaching the elevation (8) and the plateau (9) down to the surface of the outer side (7) of the sidewall (3) of the pneumatic vehicle tyre (1).

2. Method according to Claim 1,
**characterized in that**
the mould parting plane (6) of the vulcanizing mould in the region of the elevation (8) runs ahead of the plateau surface (9) of the pneumatic vehicle tyre (1) .

3. Method according to either of the preceding claims,
**characterized in that**
before the detachment of the elevation (8) and the plateau (9), the plateau surface (9) has a transition (12) to the sidewall (3) of the pneumatic vehicle tyre (1) and the height of the transition (12) in relation to the outer side (7) of the sidewall (3) of the pneumatic vehicle tyre (1) is lower than the height of the elevation (8).

4. Method according to one of the preceding claims,
**characterized in that**
before the detachment of the elevation (8) and the plateau (9), the elevation (8) and the plateau surface (9) are respectively formed as a ring on the outer side (7) of the sidewall (3) of the pneumatic vehicle tyre (1) and the surface of the plateau surface (9) runs equidistantly from the outer side (7) of the sidewall (3).

5. Method according to either of Claims 1 and 2,
**characterized in that**
before the detachment of the elevation (8) and the plateau (9), the plateau surface (9) is designed as running out in relation to the surface of the sidewall (3) of the pneumatic vehicle tyre (1) and goes over seamlessly into the sidewall (3).

6. Method according to one of the preceding claims,
**characterized in that**
before the detachment of the elevation (8) and the plateau (9), the width of the plateau surface (9) to be considered, in the sense of how the plateau surface (9) proceeding from the tread (2) extends in the direction of the tyre bead, is between 1 mm and 4 mm.

7. Method according to one of the preceding claims,
**characterized in that**
before the detachment of the elevation (8) and the plateau (9), the height of the elevation (8) ahead of the plateau surface (9) is between 0.2 mm and 0.6 mm.

8. Method according to one of the preceding claims,
**characterized in that**
the detaching is a cutting process.

9. Method according to one of the preceding claims,
**characterized in that**
the detaching is performed in a manual or automated manner.

10. Method according to one of the preceding claims,
**characterized in that**
the flash produced on the pneumatic vehicle tyre during the vulcanising operation is removed without leaving any residue.

## Revendications

1. Procédé de fabrication d'un pneumatique de véhicule (1) doté d'une bande de roulement profilée (2) qui se transforme des deux côtés en un flanc (3) respectivement dont les extrémités sont formées par un talon de pneu respectivement, dans lequel le pneumatique de véhicule (1) présente sur sa face extérieure (7), définie par le sens de rotation du pneumatique de véhicule (1), une saillie (8) montant à la manière d'une rampe au moins par endroits, s'étendant dans la direction circonférentielle, partant du côté de la bande de roulement (2) et orientée en direction du talon de pneumatique, et une surface de plateau (9) adjacente à la saillie (8), en utilisant un moule de vulcanisation composé de plusieurs segments de profil d'un anneau à segments (4), disposés de manière mobile dans la direction radiale, pour profiler la bande de roulement (2), et de plusieurs coquilles de moulage de flanc (5) pour réaliser les flancs (3), un plan de démoulage (6) étant défini entre l'anneau à segments (4) et les coquilles de moulage de flanc (5), les coquilles de moulage de flanc (5) présentant un creux complémentaire à la saillie (8) et à la surface de plateau (9), comprenant les étapes de procédé suivantes consistant à :
- introduire un pneumatique cru ou « pneumatique vert » dans le moule de vulcanisation composé de plusieurs segments de profil d'un anneau à segments (4), disposés de manière mobile dans la direction radiale, pour profiler la bande de roulement (2), et de plusieurs coquilles de moulage de flanc (5) pour réaliser les flancs (3), un plan de démoulage (6) étant défini entre l'anneau à segments (4) et les coquilles de moulage de flanc (5),
- fermer le moule de vulcanisation et réaliser le pneumatique de véhicule (1) par chauffage du moule de vulcanisation jusqu'à la température de vulcanisation,
- retirer le pneumatique de véhicule (1) ainsi produit du moule de vulcanisation,
**caractérisé par**
- la séparation de la saillie (8) et du plateau (9) jusqu'à la surface de la face extérieure (7) du flanc (3) du pneumatique de véhicule (1).

2. Procédé selon la revendication 1, **caractérisé en ce que** le plan de démoulage (6) du moule de vulcanisation s'étend au niveau de la saillie (8), avant la surface de plateau (9) du pneumatique de véhicule (1).

3. Procédé selon l'une quelconque des revendications précédentes, **caractérisé en ce qu'**avant la séparation de la saillie (8) et du plateau (9), la surface de plateau (9) présente un passage (12) au flanc (3) du pneumatique de véhicule (1), et la hauteur du passage (12) est inférieure à la hauteur de la saillie (8) par rapport à la face extérieure (7) du flanc (3) du pneumatique de véhicule (1).

4. Procédé selon l'une quelconque des revendications précédentes, **caractérisé en ce qu'**avant la séparation de la saillie (8) et du plateau (9), la saillie (8) et la surface de plateau (9) sont respectivement réalisées sous la forme d'un anneau sur la face extérieure (7) du flanc (3) du pneumatique de véhicule (1), et la surface de la surface de plateau (9) s'étend de manière équidistante à la face extérieure (7) du flanc (3).

5. Procédé selon l'une quelconque des revendications 1 et 2, **caractérisé en ce qu'**avant la séparation de la saillie (8) et du plateau (9), la surface de plateau (9) est réalisée en finissant vers la surface du flanc (3) du pneumatique de véhicule (1) et passe au flanc (3) sans interruption.

6. Procédé selon l'une quelconque des revendications précédentes, **caractérisé en ce qu'**avant la séparation de la saillie (8) et du plateau (9), la largeur de la surface de plateau (9), à considérer dans le sens de l'extension de la surface de plateau (9), en partant de la bande de roulement (2), en direction du talon de pneumatique, mesure entre 1 mm et 4 mm.

7. Procédé selon l'une quelconque des revendications précédentes, **caractérisé en ce qu'**avant la séparation de la saillie (8) et du plateau (9), la hauteur de la saillie (8) avant la surface de plateau (9) mesure entre 0,2 mm et 0,6 mm.

8. Procédé selon l'une quelconque des revendications précédentes, **caractérisé en ce que** la séparation est un procédé de découpage.

9. Procédé selon l'une quelconque des revendications précédentes, **caractérisé en ce que** la séparation est effectuée de manière manuelle ou automatisée.

10. Procédé selon l'une quelconque des revendications précédentes, **caractérisé en ce que** les bavures latérales formées pendant l'opération de vulcanisation sont éliminées sans laisser de résidus.
